# EUROPÄISCHE PATENTANMELDUNG

(11) **EP 1 596 052 A1**
(43) Veröffentlichungstag der Anmeldung: **16.11.2005**
(21) Anmeldenummer: 04011411.8
(22) Anmeldetag: 13.05.2004
(51) Int. Cl.: F02C 6/14, F02C 3/20, F03D 9/02

(54) **Kraftwerksystem mit einer Windenergieanlage, einem Wasserstofferzeuger, einem Wasserstoffspeicher und einer Gasturbine**

(71) Anmelder: SIEMENS AKTIENGESELLSCHAFT, 80333 München (DE)
(72) Erfinder: Cirkel, Hans-Juergen, Dr., 91080 Uttenreuth (DE)

(57) **Zusammenfassung**

Es wird ein Kraftwerksystem (1) vorgeschlagen, mit dem eine sichere und zuverlässige Stromversorgung gewährleistet werden kann. Dazu weist das Kraftwerksystem (1) ein erstes Kraftwerk (4) zum Erzeugen von elektrischem Strom aus einer regenerativen Energiequelle, insbesondere mit nicht planbarer Leistung, einen Wasserstofferzeuger (9) zum Erzeugen von Wasserstoff mittels des von dem ersten Kraftwerk (4) erzeugten Stromes, einen Speicher (11) zum Speichern des erzeugten Wasserstoffes und ein zweites Kraftwerk (13) zum Erzeugen von elektrischem Strom mittels des gespeicherten Wasserstoffes auf.

## Beschreibung

Die vorliegende Erfindung betrifft ein Kraftwerksystem mit einem Kraftwerk zum Erzeugen von elektrischem Strom aus einer regenerativen Energiequelle.

U. a. zur Verringerung des CO₂ Ausstoßes durch herkömmliche Kraftwerke werden zunehmend Kraftwerke eingesetzt, die Strom aus regenerativen Energiequellen, wie Sonne und Wind, gewinnen und daher besonders umweltfreundlich sind. Diese Energiequellen sind zudem unerschöpflich. Nachteilig an den regenerativen Kraftwerken ist, dass sich die von ihnen produzierte Leistung nicht exakt planen und insbesondere nicht an den geforderten Verbrauch anpassen lässt.

Es ist des Weiteren bekannt, dass Wasserstoff als alternativer Energieträger dienen kann. Wasserstoff ist kein Primärenergieträger, lässt sich allerdings in Wasserstoffspeichern speichern. Wasserstoff wird durch die Elektrolyse von Wasser gewonnen und kann als Brennstoff in einer Gasturbine zur Stromerzeugung eingesetzt werden.

Der Erfindung liegt die Aufgabe zugrunde, ein Kraftwerksystem anzugeben, mit dem eine sichere und zuverlässige Stromversorgung gewährleistet werden kann.

Diese Aufgabe ist erfindungsgemäß mit einem Kraftwerksystem mit den Merkmalen des Anspruchs 1 gelöst. Erfindungsgemäß weist das Kraftwerksystem einen Wasserstofferzeuger zum Erzeugen von Wasserstoff mittels des von dem regenerativen Kraftwerk erzeugten Stromes sowie ein zweites Kraftwerk auf, das zum Erzeugen von elektrischem Strom mittels gespeichertem Wasserstoff dient. In der Kombination des regenerativen ersten Kraftwerks mit dem erfindungsgemäßen zweiten Kraftwerk wird ein Grundlastkraftwerk realisiert, mit dem sich Strom je nach Bedarf erzeugen lässt. Die Grundlastversorgung mit Strom ist dadurch von der nicht planbaren Erzeugung von Strom durch das regenerative erste Kraftwerk entkoppelt. Von dem ersten Kraftwerk gelieferter, allerdings nicht direkt nachgefragter Strom wird zum Erzeugen von Wasserstoff genutzt. Dieser wird in einem Speicher abgespeichert und bei Bedarf von dem zweiten Kraftwerk verstromt. Eine hohe Versorgungssicherheit mit hoher Stromqualität ist somit gewährleistet. Des Weiteren können alle Dienstleistungen eines Versorungsnetzes, wie ein Ermöglichen eines Leistungsbilanzausgleiches und ein Bereitstellen von Reserve- und Blindleistung, vorteilhafterweise uneingeschränkt erbracht werden. Dabei muss das regenerative erste Kraftwerk diese Netzdienstleistungen nicht selbst erbringen, sondern kann dies dem zweiten Kraftwerk überlassen. Im übrigen können durch das erfindungsgemäße Kraftwerksystem mit dem zentralen zweiten Kraftwerk im Vergleich zur dezentralen Verstromung Kostenvorteile erzielt werden. Es sind geringe Investitionen für elektrische Betriebsmittel, wie z. B. Übertragungsleitungen, notwendig, die ganzjährig bei hoher Auslastung betrieben werden können. Ohne das erfindungsgemäße Kraftwerkssystem müssten von z.B. verbraucherfernen Windparks in der Nordsee Leitungen mit einer auf die Maximalleistung der Windparks ausgelegten Kapazität in die Verbraucherzentren in der Mitte Europas errichtet werden. Mit dem Kraftwerkssystem reicht eine wesentlich geringere Leitungskapazität, die bei ungefähr der über das Jahr gemittelten Leistung z.B. der Windkraftwerke liegt. Ein aufwändiges Wasserstoffnetz, das bei einer dezentralen Energieversorgung mit Wasserstoff notwendig wäre, kann entfallen. Weiterhin liegen die spezifischen Investitionskosten für das zweite Kraftwerk erheblich unter denen von kleinen dezentralen Einheiten. Es kann ferner ein hoher elektrischer Wirkungsgrad gewährleistet werden.

Bei einer vorteilhaften Weiterbildung des erfindungsgemäßen Kraftwerksystems ist das erste Kraftwerk demnach eine Windenergieanlage bzw. ein Windpark hoher elektrischer Leistung.

Windenergie ist eine wichtige regenerative Energiequelle, die bereits heute einen nennenswerten Beitrag zur Stromversorgung leistet. Insbesondere an den Küsten ist ein Einsatz von vielen, zu einem sogenannten Windpark miteinander gekoppelten Windenergieanlagen, die sowohl auf dem Land als auch im Meer aufgestellt sind, sinnvoll. Ein solcher Windpark stellt ein verbraucherfernes Großkraftwerk dar, das einen hohen Anteil nicht planbarer Energie liefert. Dieses Großkraftwerk mit seiner großen, nichtplanbaren, regenerativen Energieproduktion kann in Verbindung mit dem erfindungsgemäßen, zentralen zweiten Kraftwerk mit einer entsprechend angepassten Leistung besonders gut zu einem Kraftwerksystem mit planbarer Stromproduktion ergänzt werden.

Bei einer ebenfalls vorteilhaften Weiterbildung der Erfindung ist das erste Kraftwerk ein Gezeitenkraftwerk oder ein Wellenkraftwerk.

Der erfindungsgemäße Wasserstofferzeuger ist vorteilhaft ein Elektrolyseur zum Erzeugen von Wasserstoff mittels Elektrolyse. Dadurch lässt sich auf einfache und effektive Weise Wasserstoff aus dem regenerativen Strom des ersten Kraftwerkes erzeugen.

In einer weiteren vorteilhaften Ausgestaltung der Erfindung ist das zweite Kraftwerk ein Gasturbinen-Kraftwerk oder ein Gas- und Dampfkraftwerk, GuD-Kraftwerk, das sich auf eine hohe Dynamik mit einer großen Anzahl von Lastwechseln zur Befriedigung der Stromnachfrage auslegen lässt. Ein solches GuD-Kraftwerk hat einen hohen Kurzschlussstrom, durch den sich im Falle einer Störung Spannungseinbrüche besonders gut beherrschen lassen. In dem GuD-Kraftwerk vorhandene, rotierende Kraftwerkskomponenten mit entsprechend großen Schwungmassen, z. B. einer Turbine oder eines Generators, können eine erhebliche mechanische Energie speichern, die die Stabilität des Versorgungsnetzes unterstützen. Dadurch können kurzfristige Schwankungen der Verbundnetzleistung, beispielsweise bei Ausfall eines Teiles des Verbundnetzes, und damit verbundener Überproduktion von Strom, oder bei einem Ausfall von Verbundnetzkraftwerken, und damit verbundener Unterversorgung mit Strom, über eine Erhöhung bzw. Verringerung der Frequenz des Versorgungsnetzes aufgenommen werden.

Besonders vorteilhaft sind eine erste Übertragungseinrichtung zum Übertragen von von dem ersten Kraftwerk erzeugtem Strom zu dem Wasserstofferzeuger und eine zweite Übertragungseinrichtung zum Übertragen von von dem ersten Kraftwerk erzeugten Strom in ein insbesondere offensichtliches Versorgungsnetz vorhanden. Die erste und die zweite Übertragungseinrichtung können auch als Einheit, insbesondere versehen mit einer Verteilstelle gestaltet sein. Dadurch kann der von dem ersten Kraftwerk erzeugte Strom sowohl zur Erzeugung des Wasserstoffes verwendet als auch direkt in das insbesondere öffentliche Versorgungsnetz eingespeist werden.

In einer besonders vorteilhaften Ausgestaltung ist die zweite Übertragungseinrichtung so ausgestaltet, dass sie zur Übertragung einer kleineren Leistung als der Nennleistung des ersten Kraftwerkes, insbesondere zur Übertragung der halben Nennleistung des ersten Kraftwerkes, ausgelegt ist. Dadurch kann berücksichtig werden, dass das regenerative erste Kraftwerk, gemittelt über ein Jahr, nicht die volle Nennleistung erzeugt. Insbesondere im Meer aufgebaute Windenergieanlagen, sogenannte Off-Shore Windparks, speisen, gemittelt über ein Jahr, ca. ihre halbe Nennleistung in das Versorgungsnetz ein. Aufgrund der Auslegung der Übertragungseinrichtung auf die kleinere Leistung als die Nennleistung kann eine besonders gute Auslastung der Übertragungskapazitäten bei gleichzeitig geringen Investitionskosten erreicht werden. Der bei großer Stromproduktion des ersten Kraftwerkes nicht über die zweite Übertragungseinrichtung direkt in das Versorgungsnetz einspeisbare Strom kann dann über die erste Übertragungseinrichtung zur Erzeugung von Wasserstoff eingesetzt werden.

Die zweite Übertragungseinrichtung, die insbesondere zur Übertragung vom regenativen Kraftwerk zu einer Verteilstelle dient, kann vorteilhafterweise zum Übertragen von Gleichstrom, insbesondere mittels einer sogenannten Hochspannungs-Gleichstrom-Übertragung, HGÜ, ausgelegt sein. Diese Art der Übertragung wird vorzugsweise bei Seekabeln ab 30km bis 40km Länge eingesetzt. Für Überlandleitungen ab ca. 500km Länge stellt die HGÜ eine kostengünstige Alternative zur Drehstromübertragung dar.

Besonders vorteilhaft ist eine Steuerung (insbesondere an der Verteilstelle) zum Steuern einer Verteilung des von dem ersten Kraftwerk erzeugten Stromes nach vorgegebenen Kriterien an die erste Übertragungseinrichtung und die zweite Übertragungseinrichtung vorhanden. Damit kann auf der Grundlage der Kriterien, insbesondere von Prognosen für den Strombedarf und/oder für den von dem ersten Kraftwerk erzeugbaren Strom, effektiv festgelegt werden, welcher Anteil des von dem ersten Kraftwerk erzeugten Stromes direkt in das Versorgungsnetz einsgespeist und welcher Anteil zum Erzeugen von Wasserstoff eingesetzt wird.

Weiterhin vorteilhaft sind geeignete Aufbereitungseinrichtungen zum Aufbereiten des Wasserstoffes, insbesondere ein Kompressor und eine Entspannungsturbine, vorhanden. Der Kompressor verdichtet den im Elektrolyseur erzeugten Wasserstoff auf möglichst hohen Druck, um in einem möglichst kleinen Volumen eine große Masse von Wasserstoff speichern zu können. Bevor der gasförmig gespeicherte Wasserstoff in der Turbine umgesetzt werden kann, wird er in einer Entspannungsturbine entspannt, die die Kompressionsenergie zu einem großen Teil zurückgewinnt.

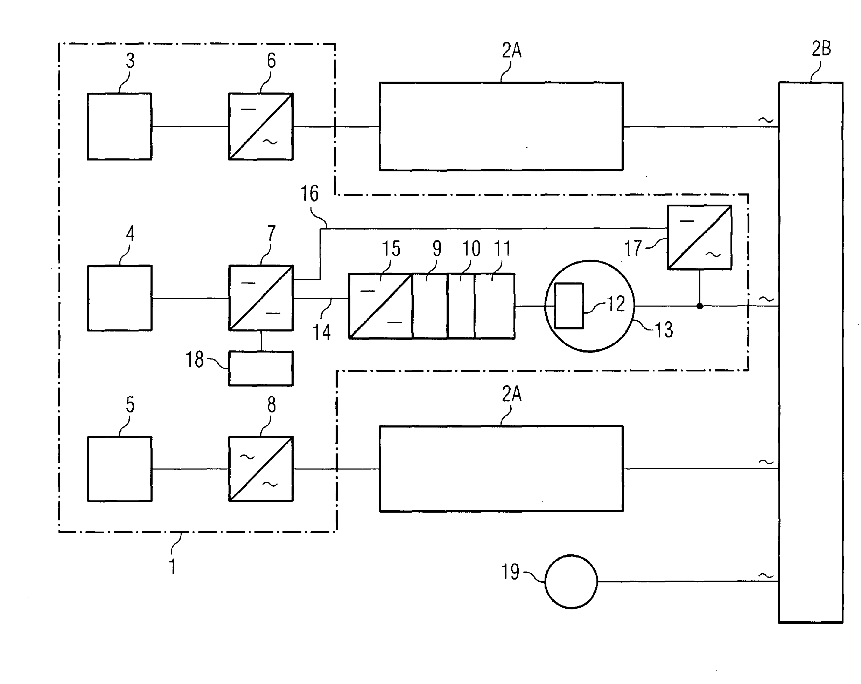

Nachfolgend wird ein Ausführungsbeispiel eines erfindungsgemäßen Kraftwerksystems anhand der beigefügten schematischen Zeichnung näher erläutert. Es zeigt:
Die Figur ein Ausführungsbeispiel eines erfindungsgemäßen Kraftwerksystems, das an ein öffentliches Versorgungsnetz angeschlossen ist.

Die Figur zeigt ein Ausführungsbeispiel eines erfindungsgemäßen Kraftwerksystems 1, das an ein öffentliches Versorgungsnetz angeschlossen ist. Das öffentliche Versorgungsnetz enthält hier beispielhaft zwei 110kV Verteilungsnetze 2A und ein 400kV Übertragungsnetz 2B. Die beiden Verteilungsnetze 2A sind mit dem Übertragungsnetz 2B verbunden. Das Kraftwerksystem 1 weist drei Windparks 3, 4 und 5 auf, die jeweils wiederum eine Vielzahl von zusammengeschalteten Windenergieanlagen enthalten. Die Windenergieanlagen erzeugen aus Wind elektrischen Strom. Die Windparks 3, 4, 5 können an der Küste (sogenannter On-Shore Windpark) oder im Meer (sogenannter Off-Shore Windpark) aufgebaut sein.

Die einzelnen Windenergieanlagen erzeugen einen Wechselstrom, der mittels geeigneter Umrichter zum Transportieren oder Weiterverarbeiten, z. B. je nach Art der Windenergieanlage oder Transportstrecke, in Gleichstrom oder Wechselstrom mit netzsynchroner Frequenz umgewandelt wird. Im Ausführungsbeispiel ist dem ersten Windpark 3 ein erster Umrichter 6 nachgeschaltet, der einen zuvor von einem nicht dargestellten Umrichter erzeugten Gleichstrom in einen netzsynchronen Wechselstrom zur Einspeisung in das Verteilungsnetz 2A wandelt. Dem zweiten Windpark 4 ist ein zweiter Umrichter 7 nachgeschaltet, der einen zuvor von einem weiteren, nicht dargestellten Umrichter erzeugten Gleichstrom zur Weiterübertragung in einen Gleichstrom mit anderen Eigenschaften wandelt. Dem dritten Windpark 5 ist ein dritter Umrichter 8 nachgeschaltet, der den erzeugten Wechselstrom zur Einspeisung in das Verteilungsnetz 2A in einen netzsynchronen Wechselstrom wandelt.

Das Kraftwerksystem 1 weist weiterhin einen Elektrolyseur 9 auf, der als Wasserstofferzeuger zum Erzeugen von Wasserstoff mittels Elektrolyse von Wasser dient. Der von dem Elektrolyseur 9 erzeugte gasförmige Wasserstoff wird einem Wasserstoffkompressor 10 und der auf hohen Druck komprimierte Wasserstoff einem Wasserstoffspeicher 11 zum Speichern zugeführt. Zur Weiterverarbeitung des gespeicherten Wasserstoffs ist eine Wasserstoff-Entspannungsturbine 12 vorgesehen, die den gespeicherten Wasserstoff auf einen für eine Gasturbine notwendigen Vordruck entspannt und die zur Komprimierung aufzuwendende Energie zum Teil rückgewinnt. Die Entspannungsturbine 12 kann vorteilhafterweise Teil eines Gas- und Dampfkraftwerkes 13, GuD-Kraftwerk, sein, das zur Erzeugung von Strom durch die Verarbeitung des gespeicherten Wasserstoffes dient. Der von dem GuD-Kraftwerk 13 gelieferte Strom wird in das Übertragungsnetz 2B eingespeist und in die Verbrauchszentren transportiert. Das GuD-Kraftwerk 13 kann als Grundlastkraftwerk, und insbesondere auch für den Leistungsbilanzausgleich, eingesetzt werden, was von dem Windpark 4 aufgrund der nicht planbaren, zur Verfügung stehenden Menge an Wind nicht geleistet werden kann.

Der zweite Umrichter 7 ist über eine erste Übertragungsleitung 14 - vorzugsweise ein HGÜ Leitung - mit dem Elektrolyseur 9 verbunden, wobei zwischen dem Umrichter 7 und dem Elektrolyseur 9 ein vierter Umrichter 15 angeordnet ist, der eine Anpassung des Gleichstromes an die Erfordernisse des E-lektrolyseurs 9 vornimmt. Des Weiteren ist der zweite Umrichter 7 über eine zweite Übertragungsleitung 16 mit einem fünften Umrichter 17 verbunden, der den über die zweite Übertragungsleitung 16 übertragenen Gleichstrom in einen Wechselstrom mit Netzfrequenz wandelt. Dieser Wechselstrom wird dann zur Weiterleitung in die Verbrauchszentren in das Übertragungsnetz 2B eingespeist. Beide Übertragungsleitungen 14 und 16 sind hier vorteilhafterweise zur Hochspannungs-Gleichstrom-Übertragung, HGÜ, des Stromes ausgelegt. Es ist aber auch möglich, an Stelle der Gleichstromübertragung eine Drehstrom-Höchstspannungs-Übertragung, DHÜ, vorzunehmen.

Der zweite Umrichter 7 dient im vorliegenden Beispiel zusätzlich als Verteilungseinrichtung zum Verteilen des von dem Windpark 4 gelieferten Stromes auf die erste Übertragungsleitung 14 und die zweite Übertragungsleitung 16. Der Umrichter 7 ist dazu mit einer Steuerung 18 verbunden, die zum Steuern des Verteilens ausgestaltet ist. Die Steuerung 18 nimmt die Verteilung nach vorgegebenen Kriterien vor, die hier vor allem auf Prognosemodellen für den zu erwartenden Strombedarf durch die Verbraucher und für die Menge des durch den Windpark 4 erzeugten Stromes beruhen. Abhängig von diesen Prognosen veranlasst die Steuerung 18 das Verteilen des Stromes auf die erste Übertragungsleitung 14 und die zweite Übertragungsleitung 16. Die Steuerung 18 ist des Weitern mit dem Wasserstoffspeicher 11 verbunden, um das Einspeisen von gespeichertem Wasserstoff in das GuD-Kraftwerk 13 zu steuern. Ist z. B. der netz- und verbraucherseitig geforderte Strombedarf größer als die vom Windpark 4 direkt über die zweite Übertragungsleitung 16 in das Übertragungsnetz 2B einspeisbare Strommenge, so wird die Steuerung 18 eine zusätzliche Stromproduktion durch das Verstromen von Wasserstoff mittels des GuD-Kraftwerkes 13 veranlassen.

An das Übertragungsnetz 2B sind weitere Grundlastkraftwerke angeschlossen, die ihren Strom einspeisen. Stellvertretend ist in der Figur ein weiteres GuD-Kraftwerk 19 dargestellt.

## Patentansprüche

1. Kraftwerksystem (1) mit
- einem ersten Kraftwerk (4) zum Erzeugen von elektrischem Strom aus einer regenerativen Energiequelle,
- einem Wasserstofferzeuger (9) zum Erzeugen von Wasserstoff mittels des von dem ersten Kraftwerk (4) erzeugten Stromes,
- einem Speicher (11) zum Speichern des erzeugten Wasserstoffes und
- einem zweiten Kraftwerk (13) zum Erzeugen von elektrischem Strom mittels des gespeicherten Wasserstoffes.

2. Kraftwerksystem nach Anspruch 1, **dadurch gekennzeichnet, dass** das erste Kraftwerk (4) eine Windenergieanlage ist.

3. Kraftwerksystem nach Anspruch 1, **dadurch gekennzeichnet, dass** das erste Kraftwerk ein Gezeitenkraftwerk oder ein Wellenkraftwerk ist.

4. Kraftwerksystem nach Anspruch 1, 2 oder Anspruch 3, **dadurch gekennzeichnet, dass** der Wasserstofferzeuger (9) ein Elektrolyseur zum Erzeugen von Wasserstoff mittels Elektrolyse ist.

5. Kraftwerksystem nach einem der vorhergehenden Ansprüche, **dadurch gekennzeichnet, dass** das zweite Kraftwerk (13) eine Gasturbine oder ein Gas- und Dampfkraftwerk ist.

6. Kraftwerksystem nach einem der vorhergehenden Ansprüche, **dadurch gekennzeichnet, dass** eine erste Übertragungseinrichtung (14) zum Übertragen von von dem ersten Kraftwerk (4) erzeugtem Strom zu dem Wasserstofferzeuger (9) und eine zweite Übertragungseinrichtung (16) zum Übertragen von von dem ersten Kraftwerk (4) erzeugtem Strom in ein insbesondere öffentliches Versorgungsnetz (2B) vorgesehen sind.

7. Kraftwerksystem nach Anspruch 6, **dadurch gekennzeichnet, dass** die zweite Übertragungseinrichtung (16) so ausgestaltet ist, dass sie zur Übertragung einer kleineren Leistung als der Nennleistung des ersten Kraftwerkes (4), insbesondere zur Übertragung der zirka halben Nennleistung des ersten Kraftwerkes (4), ausgelegt ist.

8. Kraftwerksystem nach Anspruch 6 oder Anspruch 7, **dadurch gekennzeichnet, dass** die zweite Übertragungseinrichtung (16) zum Übertragen von Gleichstrom, insbesondere mittels einer sogenannten Hochspannungs-Gleichstrom-Übertragung ausgelegt ist.

9. Kraftwerksystem nach einem der Ansprüche 6 bis 8, **dadurch gekennzeichnet, dass** eine Steuerung (18) zum Steuern einer Verteilung des von dem ersten Kraftwerk (4) erzeugten Stromes nach vorgegebenen Kriterien an die erste Übertragungseinrichtung (14) und die zweite Übertragungseinrichtung (16) vorgesehen ist.

10. Kraftwerksystem nach einem der vorhergehenden Ansprüche, **dadurch gekennzeichnet, dass** Aufbereitungseinrichtungen zum Aufbereiten des Wasserstoffes, insbesondere ein Kompressor (10) und eine Entspannungsturbine (12), vorgesehen sind.
